# EUROPEAN PATENT SPECIFICATION

(11) **EP 1 538 447 B1**
(45) Date of publication and mention of the grant of the patent: **31.10.2007**
(21) Application number: 04028351.7
(22) Date of filing: 30.11.2004
(51) Int. Cl.: G01N 35/10

(54) **Reagent container**
Reagenzbehälter
Récipient à réactifs

(30) Priority: 05.12.2003 JP 2003406682
(43) Date of publication of application: 08.06.2005
(73) Proprietor: Hitachi High-Technologies Corporation, Tokyo 105-8717 (JP)
(72) Inventor: Hanawa, Masaaki, Hitachinaka-shi Ibaraki 312-8504 (JP); Yamazaki, Isao, Hitachinaka-shi Ibaraki 312-8504 (JP); Tokieda, Hitoshi, Hitachinaka-shi Ibaraki 312-8504 (JP); Mimura, Tomonori, Hitachinaka-shi Ibaraki 312-8504 (JP); Oishi, Tadashi, Hitachinaka-shi Ibaraki 312-8504 (JP); Igarashi, Yoshiaki, Hitachinaka-shi Ibaraki 312-8504 (JP); Nishida, Masaharu, Hitachinaka-shi Ibaraki 312-8504 (JP); Sato, Takeshi, Hitachinaka-shi Ibaraki 312-8504 (JP)
(74) Representative: Strehl Schübel-Hopf & Partner

(56) References cited:
- EP-A- 1 524 526
- WO-A-03/020427
- DE-A1- 4 313 807
- US-A- 5 397 542
- US-A- 6 149 872
- US-A1- 2001 028 863

## Description

### BACKGROUND OF THE INVENTION

### 1. Field of the Invention

The present invention relates to a combination of reagent containers for containing a reagent used in performing an analysis, and more particularly to a combination of reagent containers adapted for forming an integral unit of plural reagent containers assembled together.

### 2. Description of the Related Art

In the field of automatic analysis, an automatic analyzer of random access type using a plurality of reaction lines in random has been developed and an analysis processing capability has been drastically increased. That trend has accelerated consumption of reagents and has increased a frequency at which reagent containers are to be exchanged.

Also, an automatic analyzer capable of measuring a wider range of items has been developed with the progress of measurement technology. Correspondingly, the number of reagent containers settable in a reagent storage has also increased.

Known automatic analyzers employ reagent storages having various forms, such as circular and box-like forms, and reagent containers are set in each of those reagent storages. An operator is required to enter information indicating at which position a reagent for what item has been set. Further, for example, when the reagent is depleted during measurement, the operator is also required to perform similar operations.

Recently, an automatic analyzer has been practiced which can automatically perform reagent management by pasting a barcode label representing information, such as the kind of reagent, the lot number and the expiry date, to a reagent container and reading the information by a barcode reader disposed in a reagent storage, and hence which can reduce the burden exerted on the operator and can prevent human errors, e.g., misplacement.

For use in such an automatic analyzer, there are two types of reagent containers. In one type, a barcode representing information of a reagent contained in a reagent container is pasted to each reagent container. In the other type, a plurality of reagents used for one analysis item are combined with each other in one cassette corresponding to one analysis item, and a barcode representing information of all the reagents is pasted to the cassette.

When the information representing the contents of the reagent container is managed per reagent container, various kinds of information, such as the kind of reagent (e.g., a first or second reagent classified depending on the timing at which each reagent is to be added), the code of the reagent container (reagent volume), and the number of times at which the reagent can be used for measurement, are contained in a reagent barcode. Analysis parameters set in the automatic analyzer includes, for each measurement item, basic analysis conditions, such as the measurement wavelength and the sample amount, and the code of the reagent container per reagent.

On the other hand, when a plurality of reagents used for one analysis item are combined with each other in one cassette corresponding to one analysis item and the information of all the reagents is affixed to the cassette, a plurality of reagent containers used in the relevant analysis are placed in the cassette. The combination of the reagent containers placed in the cassette is decided and cannot be changed. Analysis parameters for the reagent cassette are given as the analysis conditions set for the automatic analyzer with the code of the reagent cassette serving as a key. That type of reagent container is disclosed, for example, in Patent Reference 1; JP.A 5-302924.

US 6149872 A discloses a modular cartridge of reagent containers with the features of the preamble of claim 1. Similar assemblies of reagent containers are also disclosed in EP 1524526 A, published after the priority date of the present application, and US 5397542 A.

### SUMMARY OF THE INVENTION

In a clinical test for analyzing a component contained in a biological sample, two or more kinds of reagents are usually employed because it is difficult to perform the analysis by using one kind of reagent.

When the information representing the contents of the reagent container is managed per reagent container, the operator must prepare two kinds of reagents for each measurement item. Operations required for managing and preparing reagents can be performed without problems when a dedicated operator is in charge of those operations, but a difficulty arises when an unskilled operator performs those operations. Also, in the case of setting many measurement items, a large number of reagent containers must be placed in the reagent storage, thus resulting in a large burden exerted on the operator and poor space efficiency. Under those situations, it is important to enable any operator to easily place the reagent containers in proper combinations regardless of knowledge of the operator, and to increase the space efficiency.

On the other hand, when a plurality of reagents used for one analysis item are combined with each other in one cassette corresponding to one analysis item, operations required for the operator are relatively easy, and a space required in the reagent storage for holding the reagent containers can be reduced to a half. However, because the known reagent container has a structure of the type inserting a reagent bottle in a dedicated holder and fitting a cap on the holder, there is a limit in flexibility in selecting combinations of reagents.

Accordingly, it is an object of the present invention to provide a reagent container used for automatic analysis in an automatic analyzer, which enables reagents to be set with ease and which can increase flexibility in selecting combinations of the reagents.

To achieve the above object, the present invention is constructed as defined in claim 1.

In a reagent container having at least one sealable opening and being capable of containing a reagent therein, the reagent container has a joint portion enabling at least two reagent containers to be directly jointed to each other; and the sum of lengths of the reagent containers directly jointed to each other through respective joint portions is substantially constant.

So long as the condition that the sum of lengths of the reagent containers in the jointed state is substantially constant is satisfied, the reagent containers may be jointed together through the joint portions by using a combination of a recess and a projection, an adhesive tape, or a barcode label. Also, so long as the sum of lengths of the jointed reagent containers is substantially constant, combinations of the jointed reagent containers having volumes different from each other are freely selected.

The term "sealable opening" means an opening that can be sealed off by any means to be kept from contact with an atmosphere during storage. Example of such means include a screwed cap or a seal peeled off when the reagent container is used.

The word "substantially" used in the above expression, i.e., "the sum of lengths of the reagent containers directly jointed to each other through respective joint portions is substantially constant", means that, in an automatic analyzer in which the reagent container is set, the size of a reagent container tray is usually defined within a certain range of accuracy, and the sum of lengths of the jointed reagent containers is held within an allowable range of the defined size. Although the extent indicated by the word "substantially" varies depending on the dimensional accuracy required for the reagent container tray used in the analyzer in which the reagent container is set, several millimeters or smaller values can be said as falling within the "substantially constant" range.

According to the present invention, a reagent container can be obtained which enables reagents to be set with ease and which can increase flexibility in selecting combinations of the reagents.

### BRIEF DESCRIPTION OF THE DRAWINGS

Fig. 1 is a schematic perspective view of an automatic analyzer using reagent cassettes each comprising reagent containers according to the present invention;
Figs. 2A and 2B show the first embodiment of the reagent container, which is not an embodiment of the invention;
Figs. 3A and 3B show the second embodiment of the reagent, containers which is an embodiment of the invention;
Figs. 4A and 4B show the third embodiment of the reagent container, which is not an embodiment of the invention;
Figs. 5A and 5B show the fourth embodiment of the reagent container, which is not an embodiment of the invention;
Figs. 6A to 6F are explanatory views showing another projection form in the first embodiment of the reagent container;
Figs. 7A to 7F are explanatory views showing still another projection form in the first embodiment of the reagent container; and
Figs. 8A to 8F are explanatory views for showing still another projection form in the first embodiment of the reagent container.

### DESCRIPTION OF THE PREFERRED EMBODIMENTS

Embodiments of the present invention will be described below with reference to the drawings.

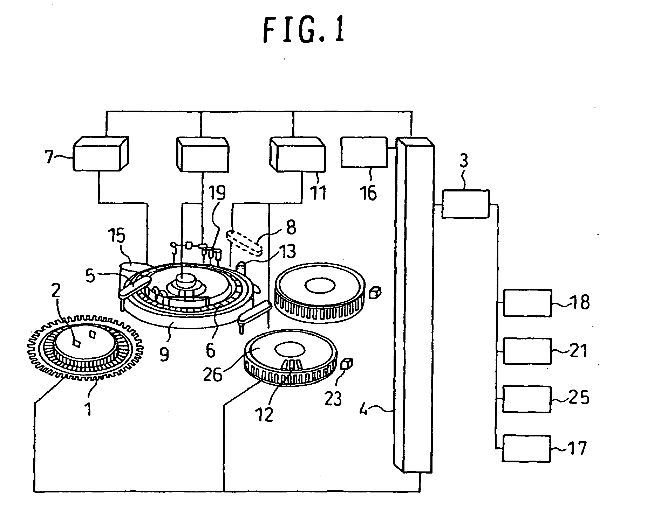

Fig. 1 is a schematic view showing an automatic analyzer using reagent cassettes according to the present invention;

In Fig. 1, the automatic analyzer comprises a sample cup 1, a sample disk 2, a computer 3, an interface 4, a sample dispensing probe 5, a reaction cell 6, a sample pump 7, a reagent dispensing probe 8, a reaction tank 9, as reagent pump 11, a reagent cassette 12, a stirring mechanism 13, a multi-wavelength photometer 15, an A/D converter 16, a printer 17, a CRT screen 18 of a console unit, a washing mechanism 19, a keyboard 21, a reagent barcode reader 23, a hard disk 25, and a reagent disk 26. The hard disk 25 stores analysis parameters, the number of times at which each reagent bottle can be used for analysis, the maximum number of times at which the analysis can be performed, calibration results, analysis results, etc.

The analysis parameters include the item code assigned to each measurement item, the measurement wavelength, the amount of sample to be dispensed, the calibration method, the concentration of each standard solution, the number of standard solutions, a value for checking an analysis abnormality, the code of the reagent cassette necessary for each measurement item.

A reagent barcode pasted to the reagent cassette 12 contains, as reagent information, the production lot number of each reagent, the size of each reagent container, the expiry date of each reagent, and the sequence number. The sequence number is a number that differs for each cassette and is uniquely identifiable.

Registration of the reagent cassette 12 is performed in such a manner as follows. First, the reagent cassette 12 is set on the reagent disk 26 in an analysis station. Then, in response to inputting of a command indicating read of the reagent information, the reagent disk 26 is rotated and the reagent barcode reader 23 reads the reagent barcode during the rotation. By using, as a key, the reagent cassette code contained in the read information of the reagent barcode, the computer 3 searches for the relevant measurement item among items that have already been registered as the analysis parameters, and then stores the reagent information per reagent cassette in the hard disk 25.

The operation of the automatic analyzer is executed through steps of sampling, dispensing a reagent, stirring, photometry, washing the reaction cell, and data processing, such as conversion into concentration, in this order, as described below.

The sample cup 1 containing a sample therein is placed in plural number on a rack. The movement of the rack is controlled by the computer 3 through the interface 4.

In accordance with the order of samples to be analyzed, the rack is moved to a position under the sample dispensing probe 5, and a predetermined amount of sample in the relevant sample cup 1 is dispensed into one reaction cell 6 by using the sample pump 7 coupled to the sample dispensing probe 5. The reaction cell 6 into which the sample has been dispensed is moved in the reaction tank 9 to a first reagent adding position. Added to the reaction cell 6 thus moved is a predetermined amount of first reagent sucked from the relevant reagent cassette 12 by operating the reagent pump 11 which is coupled to the reagent dispensing probe 8. After addition of the first reagent, the reaction cell 6 is moved to a position of the stirring mechanism 13 where a first stirring step is performed. Those steps of reagent addition and stirring are repeated for the first to fourth reagents. The reaction cell 6 for which stirring of the contents has finished passes a light beam emitted from a light source, and the absorbance of the sample at that time is detected by the multi-wavelength photometer 15. A detected absorbance signal is sent to the computer 3 via the A/D converter 16 and the interface 4 and is subjected to data processing for conversion into concentration. Data having been converted into concentration is printed out by the printer 17 via the interface 4. The reaction cell 6 having finished the photometry is moved to a position of the washing mechanism 19 where the contents are drained and the reaction cell 6 is washed with water. The washed reaction cell 6 is used for next analysis.

### [First Embodiment]

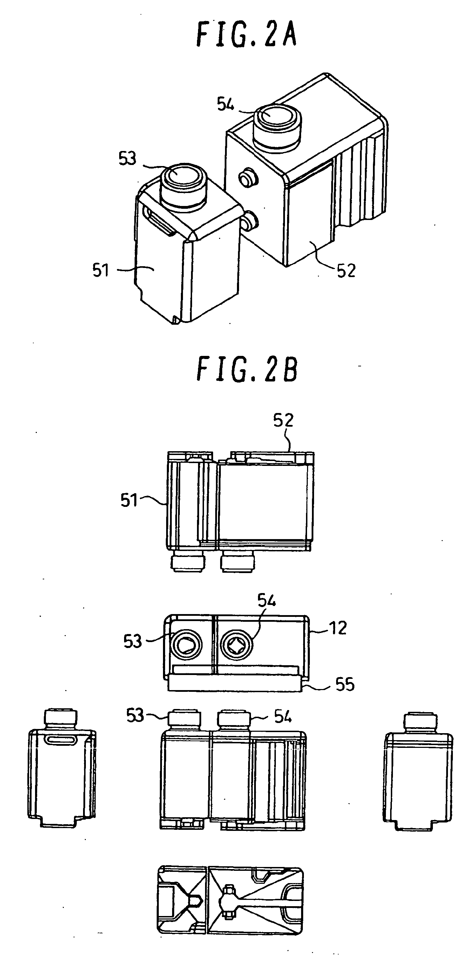

Figs. 2A and 2B show the first embodiment of the reagent container for the automatic analyzer.

The reagent cassette 12 is placed on the reagent disk 26. Referring to Figs. 2A and 2B, a first reagent container 51 is provided with recesses or projections formed in its side surface, and a second reagent container 52 is provided with projections or recesses formed in its side surface. The recesses or projections of the first reagent container 51 and the projections or recesses of the second reagent container 52 can be jointed to each other in a not easy separable manner in such a state that the relative positional relationship between the first reagent container 51 and the second reagent container 52 is fixedly held. Also, the reagent cassette 12 comprising the first and second reagent containers in the jointed state has outer dimensions defined such that the reagent cassette 12 can be placed in a reagent cassette holder on the reagent disk 26 without a play. Further, in the reagent cassette 12, an opening 53 of the first reagent container 51 and an opening 54 of the second reagent container 52, i.e., respective reagent sucking positions, are aligned with each other within a predetermined positional range on the basis of the outer dimensions of the reagent cassette 12. In addition, since the first and second reagent containers are able to stand alone and are free from a risk of falling in a state of being filled with the reagents, they can be handled with high efficiency. A barcode label 55 is pasted to the reagent cassette 12 and contains information regarding the opening 53 of the first reagent container 51, the opening 54 of the second reagent container 52, the size of each reagent container, the kind of each reagent, the analysis parameters, the lot number, etc. The position at which the barcode label 55 is pasted is not limited to an upper surface, and it may be pasted to a side surface. Although the openings 53, 54 of the first reagent container 51 and the second reagent container 52 are shown as being positioned substantially at the centers of respective upper surfaces, they may be offset from the centers. Such an offset arrangement of the openings 53, 54 from the centers is effective in defining the insert direction of the reagent cassette 12 to be specific one in the combination of the reagent disk 26 and the reagent cassette holder, and hence in preventing false insertion of the reagent cassette 12. Dents having sizes comparable to the openings 53, 54 are formed in respective bottom portions of both the reagent containers in positions right below the openings 53, 54 of the first and second reagent containers 51, 52. The presence of the dent can reduce a reagent dead volume in each reagent container. Also, when the reagent disk is rotated at high speeds, the presence of the dent is effective in reducing the influence of a centrifugal force. In particular, such a structure is advantageous when the amount of reagent is small.

While Figs. 2A and 2B show two reagent containers suitable for the case of using two kinds of reagents to analyze one component in the sample, a reagent container having outer dimensions and openings in match with those of the two reagent containers may be formed in the case of using one kind of reagent. Further, when three or more kinds of reagents are used, a corresponding number of reagent containers may be jointed together in the same manner as described above such that respective openings of the reagent containers are aligned in a straight line with certain intervals.

While Figs. 2A and 2B show the example in which each reagent container has two circular projections or recesses as joint portions, the number of joint portions may be one. In the latter case in which one circular projection or recess is formed in each reagent container, there is a possibility that the two reagent containers relatively rotate about their joint portions. To prevent such a relative rotation, the barcode label or the like may be pasted so as to extend over the upper surfaces of the two reagent containers, or the joint portion may be formed into a polygonal shape, e.g., a triangular or quadrangular shape. Further, when two or more joint portions are formed on each reagent container, those joint portions may have shapes different from each other. For example, one joint portion may have a circular shape and the other joint portion may have a quadrangular shape. Because the reagent container is molded using a plastic such as polyethylene, it is preferable that the reagent container has a shape as simple as possible and has projections or recesses as less as possible.

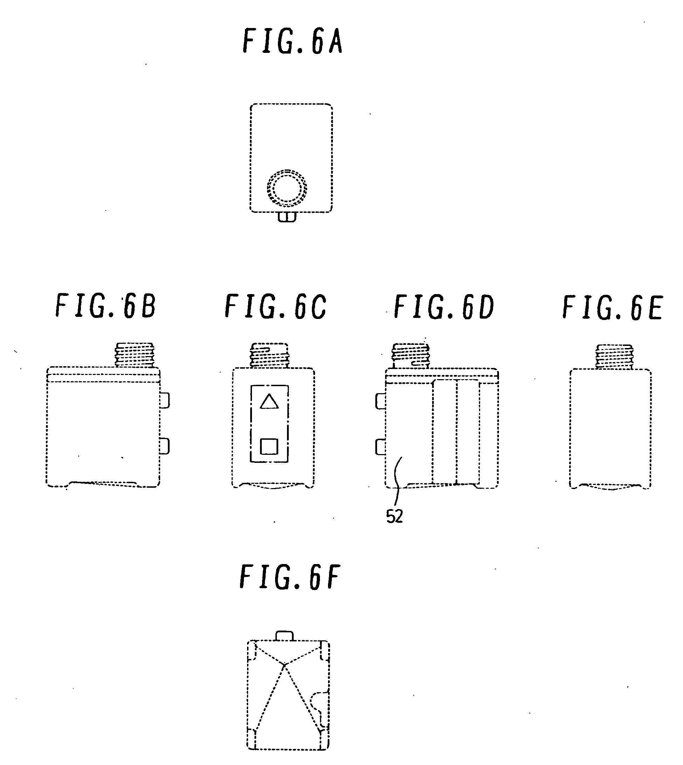

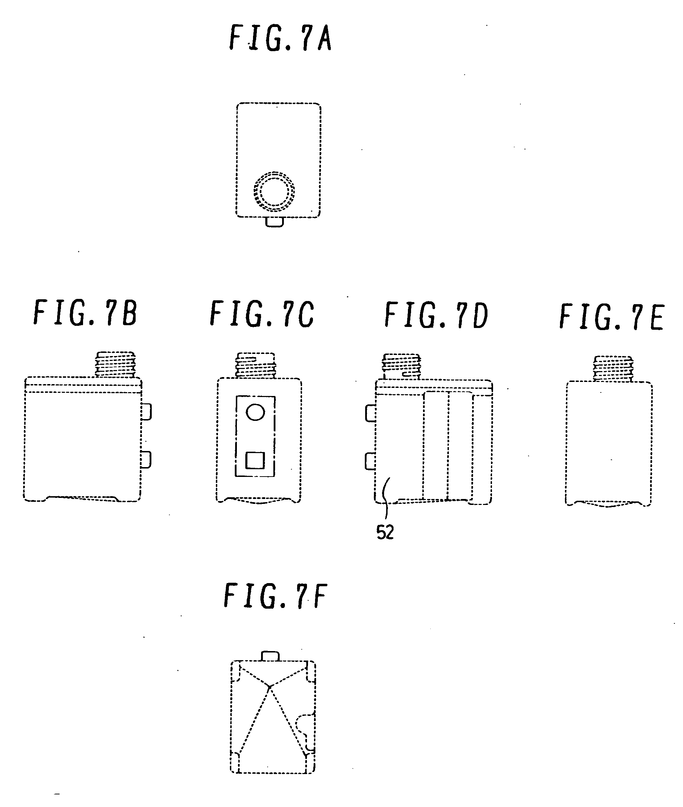

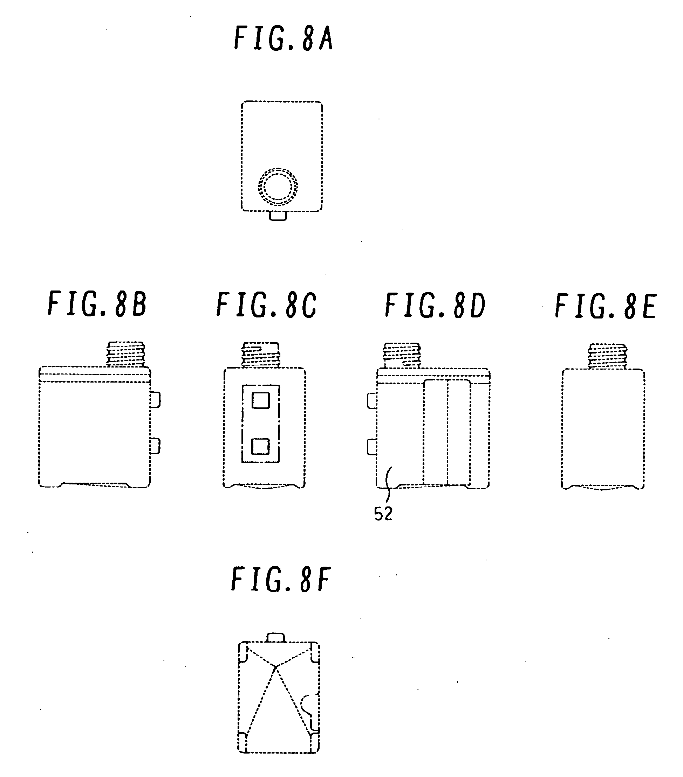

Figs. 6A to 8F are explanatory views showing other projection forms of the second reagent container 52 when the joint portions have triangular, quadrangular and other shapes. Figs. 6A to 6F show the example in which one projection of the second reagent container 52 has a triangular shape and the other projection has a quadrangular shape. Figs. 7A to 7F show the example in which one projection of the second reagent container 52 has a circular shape and the other projection has a quadrangular shape. Figs. 8A to 8F show the example in which the projections of the second reagent container 52 each have a quadrangular shape.

In external appearances of the second reagent container 52 shown in Figs. 6A to 8F, a featured portion (partial design) is indicated by solid lines within a one-dot-chain line box, and similar portions to those in the above-described embodiment are indicated by dotted lines. Note that the portions indicated by dotted lines slightly differ from corresponding portions of the second reagent container 52 shown in Figs. 2A and 2B in some areas.

Looking Figs. 6A to 6F in more detail, Fig. 6A, 6B, 6C, 6D, 6E and 6F are respectively a plan view, a left side view, a front view, a right side view, a rear view, and a bottom view.

Looking Figs. 7A to 7F in more detail, Figs. 7A), 7B, 7C, 7D, 7E and 7F are respectively a plan view, a left side view, a front view, a right side view, a rear view, and a bottom view.

Looking Figs. 8A to 8F in more detail, Figs. 8A, 8B, 8C, 8D, 8E and 8F are respectively a plan view, a left side view, a front view, a right side view, a rear view, and a bottom view.

### [Second Embodiment]

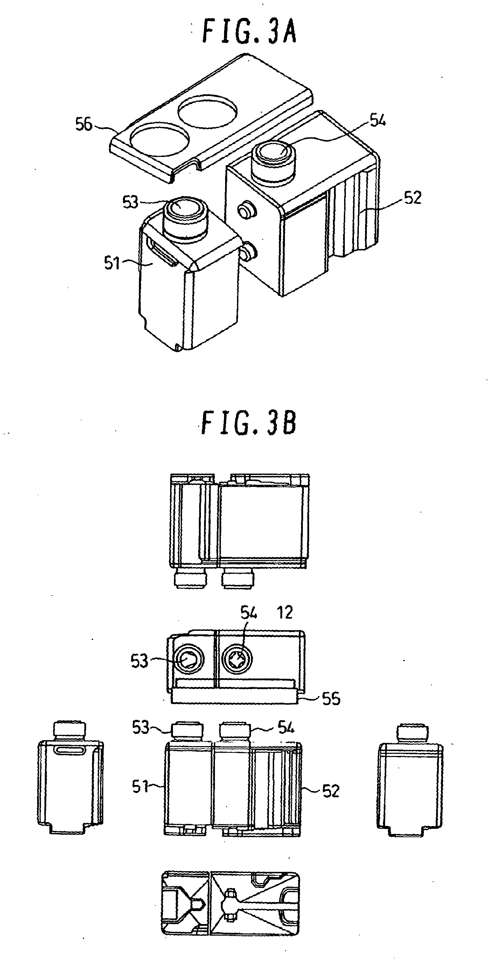

Figs. 3A and 3B show the second embodiment of the reagent container for the automatic analyzer according to the present invention.

A first reagent container 51 and a second reagent container 52 both constituting a reagent cassette 12 are the same as those shown in Figs. 2A and 2B. A reinforcement member 56 is disposed over upper surfaces of the first reagent container 51 and the second reagent container 52. The reinforcement member 56 serves to not only reinforce the joint between the first reagent container 51 and the second reagent container 52, but also to exactly define the outer dimensions of the reagent cassette and to increase accuracy in positioning of the openings 53, 54 of the first reagent container 51 and the second reagent container 52. While Fig. 3 shows the case in which the reinforcement member 56 is disposed over the upper surfaces of the first reagent container 51 and the second reagent container 52, a reinforcement member may be disposed at bottom portions of both the reagent containers for the same purposes. The other constructions and functions of the reagent cassette and the reagent containers are the same as those in the first embodiment.

### [Third Embodiment]

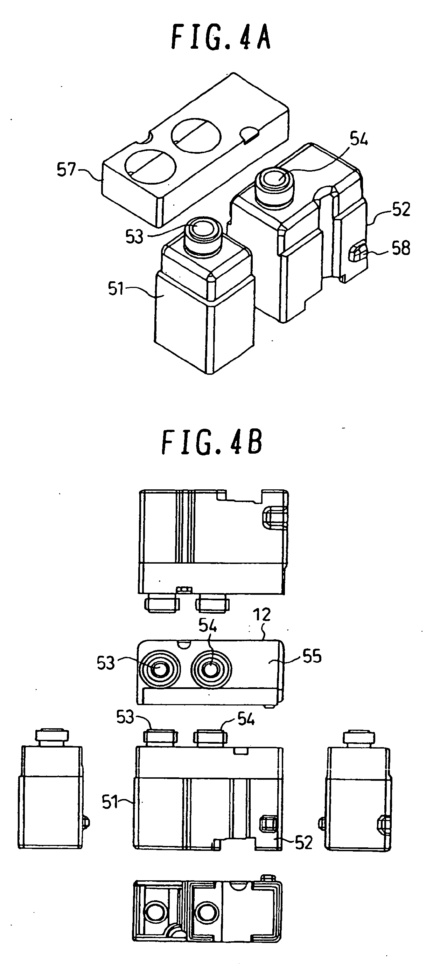

Figs. 4A and 4B show the third embodiment of the reagent container for the automatic analyzer.

This third embodiment comprises a first reagent container 51, a second reagent container 52, and a container holder 57, which cooperatively constitute a reagent cassette 12. Neither recesses nor projections used for jointing are provided in or on side surfaces of the first reagent container 51 and the second reagent container 52, and both the reagent containers are held together by the container holder 57. The container holder 57 serves to not only hold both the reagent containers together, but also to exactly define the outer dimensions and the positions of the openings 53, 54 when the first reagent container 51 and the second reagent container 52 are held together. A boss 58 is provided on a part of a side surface of the first reagent container or the second reagent container. The presence of the boss 58 is effective in defining the insert direction of the reagent cassette 12 to be specific one, and hence in preventing false insertion of the reagent cassette 12. While Figs. 4A and 4B show the case in which the container holder 57 is fitter over upper portions of both the reagent containers, it may be fitted over bottom portions of both the reagent containers. The other constructions and functions of the reagent cassette and the reagent containers are the same as those in the first embodiment.

### [Fourth Embodiment]

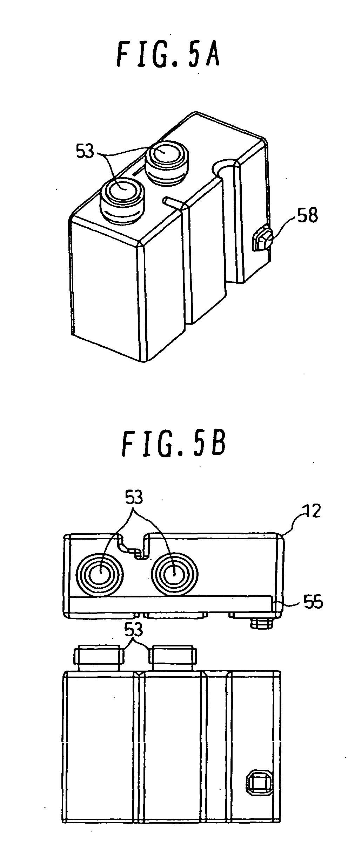

Figs. 5A and 5B show the fourth embodiment of the reagent container for the automatic analyzer.

The constructions and functions of the reagent cassette and the reagent container in this embodiment are the same as those in the first embodiment. In this fourth embodiment, the volumes of the first reagent container 51 and the second reagent container 52 are modified. The outer dimensions of the reagent cassette and the positions of the openings 53 in the jointed state are maintained by combinations of recesses and projections as in the first embodiment.

In the first to fifth embodiments of the reagent container described above, since the first reagent container 51 and the second reagent container 52 are jointed to each other, high flexibility is given in selecting the reagent volume. So long as the outer dimensions and the positions of the openings in the jointed state are maintained, the reagent containers having different volumes can be freely combined with each other depending on the amounts of required reagents. Further, the method of jointing the reagent containers is not limited to the combinations of recesses and projections or the use of a container holder, and the reagent containers may be jointed together by bonding or tape binding. A barcode level is also preferably used to joint the reagent containers together.

## Claims

1. A combination of reagent containers, to be inserted into a reaction tray of an automatic analyzer and comprising:
at least two reagent containers (51, 52), each of them capable of containing a reagent therein and comprising at least one sealable opening (53, 54), and
an identification information recording member (55) for identifying reagents contained in the reagent containers (51, 52),
wherein each of the reagent containers (51, 52) has a joint portion enabling at least two reagent containers to be directly jointed to each other,
**characterized in that**
the combination further comprises a reinforcement member (56), and
the identification information recording member (55) and the reinforcement member (56) are positioned to extend over the upper surfaces of the reagent containers (51, 52) when the reagent containers (51, 52) are directly jointed to each other through said joint portions.

2. The combination of claim 1, wherein the reinforcement member (56) is adapted to prevent separation of the reagent containers (51, 52), when they are directly jointed to each other through the joint portions.

3. The combination of claim 1, wherein the heights of the reagent containers (51, 52) are substantially equal.

4. The combination of claim 1, wherein the joint portion of one reagent container has a recessed shape, and the joint portion of another reagent container has a projected shape.

5. The combination of claim 4, wherein the joint portion is provided in at least two positions for each reagent container (51, 52).

6. The combination of claim 5, wherein for each reagent container (51, 52), the joint portions formed in at least two positions have different shapes from each other.

7. The combination of claim 1, wherein each reagent container (51, 52) further comprises an identification portion for identifying a direction of setting said reagent container when reagent containers are directly jointed to each other through said joint portions.

## Patentansprüche

1. Kombination von Reagenzbehältern, einzusetzen in ein Reaktionstablett einer automatischen Analysevorrichtung und umfassend
mindestens zwei Reagenzbehälter (51, 52), die jeweils ein Reagens beinhalten können und mindestens eine abdichtbare Öffnung (53, 54) umfassen, und
ein Aufzeichnungselement (55) für Identifikationsinformation zum Identifizieren von in den Reagenzbehältern (51, 52) enthaltenen Reagenzien,
wobei jeder der Reagenzbehälter (51, 52) einen Verbindungsabschnitt aufweist, der es ermöglicht, daß die mindestens zwei Reagenzbehälter unmittelbar miteinander verbunden werden können,
**dadurch gekennzeichnet, daß**
die Kombination ferner ein Verstärkungselement (56) umfaßt und
das Aufzeichnungselement (55) für Identifikationsinformation und das Verstärkungselement (56) so positioniert sind, daß sie über die oberen Flächen der Reagenzbehälter (51, 52) verlaufen, wenn die Reagenzbehälter (51, 52) über die Verbindungsabschnitte unmittelbar miteinander verbunden sind.

2. Kombination nach Anspruch 1, wobei das Verstärkungselement (56) dazu ausgelegt ist, die Trennung der Reagenzbehälter (51, 52) zu verhindern, wenn sie über die Verbindungsabschnitte unmittelbar miteinander verbunden sind.

3. Kombination nach Anspruch 1, wobei die Höhen der Reagenzbehälter (51, 52) im wesentlichen gleich sind.

4. Kombination nach Anspruch 1, wobei der Verbindungsabschnitt eines Reagenzbehälters eine ausgesparte Form aufweist und der Verbindungsabschnitt eines anderen Reagenzbehälters eine hervorspringende Form aufweist.

5. Kombination nach Anspruch 4, wobei der Verbindungsabschnitt für jeden Reagenzbehälter (51, 52) an mindestens zwei Stellen vorgesehen ist.

6. Kombination nach Anspruch 5, wobei die an mindestens zwei Stellen geformten Verbindungsabschnitte für jeden Reagenzbehälter (51, 52) voneinander verschiedene Formen aufweisen.

7. Kombination nach Anspruch 1, wobei jeder Reagenzbehälter (51, 52) ferner einen Identifikationsabschnitt zum Identifizieren einer Richtung aufweist, in der der Reagenzbehälter eingesetzt wird, wenn die Reagenzbehälter über die Verbindungsabschnitte unmittelbar miteinander verbunden werden.

## Revendications

1. Combinaison de conteneurs de réactif, à insérer dans un plateau de réaction d'un analyseur automatique et comportant :
au moins deux conteneurs de réactif (51, 52), chacun de ceux-ci étant capable de contenir à l'intérieur un réactif et comportant au moins une ouverture étanchéifiable (53, 54), et
un élément d'enregistrement d'informations d'identification (55) pour identifier des réactifs contenus dans les conteneurs de réactif (51, 52),
chacun des conteneurs de réactif (51, 52) ayant une partie de raccord permettant à au moins deux conteneurs de réactif d'être raccordés directement l'un à l'autre,
**caractérisée en ce que**
la combinaison comporte de plus un élément de renforcement (56), et
l'élément d'enregistrement d'informations d'identification (55) et l'élément de renforcement (56) sont positionnés pour s'étendre sur les surfaces supérieures des conteneurs de réactif (51, 52) lorsque les conteneurs de réactif (51, 52) sont raccordés directement l'un à l'autre par l'intermédiaire desdites parties de raccord.

2. Combinaison selon la revendication 1, dans laquelle l'élément de renforcement (56) est adapté pour empêcher la séparation des conteneurs de réactif (51, 52), lorsqu'ils sont raccordés directement l'un à l'autre par l'intermédiaire des parties de raccord.

3. Combinaison selon la revendication 1, dans laquelle les hauteurs des conteneurs de réactif (51, 52) sont sensiblement égales.

4. Combinaison selon la revendication 1, dans laquelle la partie de raccord d'un conteneur de réactif a une forme évidée, et la partie de raccord d'un autre conteneur de réactif a une forme de saillie.

5. Combinaison selon la revendication 4, dans laquelle la partie de raccord est agencée dans au moins deux positions pour chaque conteneur de réactif (51, 52).

6. Combinaison selon la revendication 5, dans laquelle, pour chaque contenir de réactif (51, 52), les parties de raccord formées dans au moins deux positions ont des formes différentes l'une de l'autre.

7. Combinaison selon la revendication 1, dans laquelle chaque conteneur de réactif (51, 52) comporte de plus une partie d'identification pour identifier une direction de montage dudit conteneur de réactif lorsque des conteneurs de réactif sont directement raccordés l'un à l'autre par l'intermédiaire desdites parties de raccord.
